# EUROPEAN PATENT APPLICATION

(11) **EP 4 848 413 A1**
(43) Date of publication of application: **02.12.2026**
(21) Application number: 26173113.7
(22) Date of filing: 17.04.2026
(51) Int. Cl.: H01M 10/658, H01M 50/593

(54) **PIN, END COVER ASSEMBLY, ENERGY STORAGE DEVICE, AND POWER CONSUMPTION APPARATUS**

(30) Priority: 30.05.2025 CN 202510724897
(71) Applicant: Xiamen Hithium Energy Storage Technology Co., Ltd., Xiamen, Fujian 361100 (CN)
(72) Inventor: WANG, Changhao, XIAMEN, 361100 (CN); LI, Wenbo, XIAMEN, 361100 (CN)
(74) Representative: DREISS Patentanwälte PartG mbB

(57) **Abstract**

Provided are a pin, an end cover assembly, an energy storage device, and a power consumption apparatus. The pin includes a connection portion, an adapter portion, and a bent portion connected to the connection portion and the adapter portion. The connection portion and the adapter portion are connected to two ends of the bent portion, to enable the connection portion and the adapter portion to be angled with each other. The adapter portion includes an inner surface, an outer surface, and a side surface. The inner surface and the outer surface are opposite to each other. The side surface is a surface of the adapter portion in a width direction of the adapter portion. In addition, the side surface is connected to the inner surface and the outer surface. The adapter portion has an anti-slip groove recessed towards the inside of the adapter portion from the side surface. Each anti-slip groove extends through the outer surface and the inner surface.

## Description

### FIELD

The present disclosure relates to the field of energy storage technologies, and more particularly, to a pin, an end cover assembly, an energy storage device, and a power consumption apparatus.

### BACKGROUND

With the continuous advancement of energy storage technology, requirements for an internal structure of an energy storage device are becoming increasingly high. Typically, after being led out from a cell, a cell tab of the energy storage device is welded in cooperation with a pin of an end cover assembly. However, a friction between an existing pin and the cell tab is small, and thus the cell tab tends to slide relative to the pin, which may reduce a welding yield of the cell tab and the pin, lowering a product yield of the energy storage device.

### SUMMARY

The present disclosure provides a pin, an end cover assembly, an energy storage device, and a power consumption apparatus, which can prevent a tab from sliding relative to the pin, ensuring a welding yield of the tab and the pin, and thus ensuring a product yield of the energy storage device.

In a first aspect, the present disclosure provides a pin. The pin includes a connection portion, an adapter portion, and a bent portion. The connection portion and the adapter portion are connected to two ends of the bent portion, respectively, to enable the connection portion and the adapter portion to be angled with each other. The adapter portion has an inner lateral surface, an outer lateral surface, and a side surface. The inner lateral surface and the outer lateral surface are opposite to each other in a thickness direction of the adapter portion. The side surface is a surface of the adapter portion in a width direction of the adapter portion, and the side surface is connected to the inner lateral surface and the outer lateral surface. The side surface has an anti-slip groove recessed towards the inside of the adapter portion from the side surface, the anti-slip groove extending through the outer lateral surface and the inner lateral surface.

In one embodiment, the adapter portion further has a guide surface connected to a side of the inner surface away from the bent portion in a length direction of the inner lateral surface. The guide surface is connected to the inner lateral surface. The guide surface is an inclined surface. The guide surface is inclined towards the outer lateral surface in a length direction of the adapter portion and in a direction away from the bent portion. The adapter portion includes an avoidance groove recessed from the guide surface and the inner lateral surface. The avoidance groove has a groove bottom wall and a groove side wall connected to an edge of the groove bottom wall, the groove bottom wall being connected to the guide surface at an edge of the groove bottom wall away from the inner lateral surface, the groove bottom wall being angled with each of the guide surface and the groove side wall, and the groove side wall being connected to the guide surface and the inner lateral surface.

In one embodiment, the groove bottom wall is of a trapezoid shape, in the length direction of the adapter portion, a long side of the trapezoid being located closer to an end of the adapter portion away from the bent portion than a short side of the trapezoid.

In one embodiment, two side surfaces are provided. A plurality of anti-slip grooves are provided. The plurality of anti-slip grooves are all recessed from the two side surfaces. Anti-slip grooves of the plurality of anti-slip grooves formed on each of the two side surfaces are arranged at intervals in a length direction of the adapter portion.

In one embodiment, anti-slip grooves of the plurality of anti-slip grooves formed on one of the two side surfaces are located at two ends of the adapter portion in the length direction of the adapter portion. The plurality of anti-slip grooves located on the two side surfaces are symmetrically arranged with respect to a middle axis of the adapter portion extending in the length direction of the adapter portion.

In one embodiment, in the width direction of the adapter portion, a depth of each of the plurality of anti-slip grooves is greater than or equal to 0.05 mm and smaller than or equal to 3 mm.

In a second aspect, the present disclosure provides an end cover assembly. The end cover assembly includes the pin according to the foregoing. The end cover assembly further includes: a lower plastic part; and a heat insulation member including a lateral heat insulation member and an end heat insulation member. In a thickness direction of the end cover assembly, the connection portion is mounted at a side of the lower plastic part in a thickness direction of the lower plastic part. The bent portion is bent away from the lower plastic part. The adapter portion extends away from the lower plastic part. The end heat insulation member is stacked on and connected to an inner surface of the connection portion. The lateral heat insulation member is stacked on and connected to the inner lateral surface of the adapter portion. In a length direction of the end cover assembly, a projection of each of the plurality of anti-slip grooves at least partially is located within the lateral heat insulation member.

In one embodiment, the lower plastic part includes a body. The body is provided with a protrusion protruding from a side of the body in a thickness direction of the body, the protrusion having an assembly groove recessed from a surface of the protrusion away from the body. The connection portion is mounted in the assembly groove. In the thickness direction of the end cover assembly, the end heat insulation member completely covers the assembly groove.

In one embodiment, the lateral heat insulation member extends along and is connected to a surface of the bent portion and a part of the inner surface of the connection portion. The lateral heat insulation member partially overlaps with the end heat insulation member, an overlapping part between the lateral heat insulation member and the end heat insulation member being located within the connection portion.

In a third aspect, the present disclosure provides an energy storage device. The energy storage device includes: a casing has an opening; a cell mounted in the casing, the cell including a cell body and a tab extending out of the cell body from a side surface of the cell body in a length direction of the cell body; and the end cover assembly according to the foregoing, the end cover assembly being mounted at an end of the cell body facing towards the opening. The adapter portion is located at a side of the cell body in the length direction of the cell body and is separated from the cell body by the lateral heat insulation member. The connection portion is located at a side of the cell body in a height direction of the cell body and is separated from the cell body by the end heat insulation member. The tab extends to a side of the adapter portion away from the cell body and is bent. The tab is welded to the adapter portion and electrically connected to the adapter portion. In a length direction of the energy storage device, the projection of each of the plurality of anti-slip grooves is located within the tab.

In a fourth aspect, the present disclosure provides a power consumption apparatus. The power consumption apparatus includes the energy storage device according to the foregoing. The energy storage device is configured to supply power to the power consumption apparatus.

In the related art, after being led out from the cell, a cell tab of the energy storage device is welded in cooperation with a pin of the end cover assembly. However, a friction between an existing pin and the cell tab is small, and thus the cell tab tends to slide relative to the pin, which may reduce a welding yield of the cell tab and the pin, lowering a product yield of the energy storage device.

In the embodiments of the present disclosure, the anti-slip groove is formed on the side surface of the pin in a width direction of the pin. When the tab extends to a side of the adapter portion of the pin away from the cell body, the anti-slip groove can increase a friction between the tab and the adapter portion to some extent, and reduce sliding of the tab in the length direction of the adapter portion. Therefore, a problem of inaccurate welding positioning between the tab and the adapter portion caused by the tab sliding relative to the adapter portion can be avoided, improving a welding yield of the tab and the adapter portion. Also, connection stability between the tab and the pin can further be improved after the subsequent end cover assembly and the cell are jointly mounted in the casing, preventing the pin from tearing a second tab, and thus ensuring the product yield of the energy storage device.

### BRIEF DESCRIPTION OF THE DRAWINGS

FIG. 1 is a schematic diagram of an application scenario of an energy storage device according to an embodiment of the present disclosure.
FIG. 2 is a schematic structural view of the energy storage device shown in FIG. 1.
FIG. 3 is an exploded schematic view of a partial structure of the energy storage device shown in FIG. 2.
FIG. 4 is an exploded schematic structural view of an end cover assembly of the energy storage device shown in FIG. 3.
FIG. 5 is a schematic structural view of a first pin of the end cover assembly shown in FIG. 4.
FIG. 6 is a schematic structural view of the first pin shown in FIG. 5, viewed from another perspective.
FIG. 7 is a schematic structural view of a second pin of the end cover assembly shown in FIG. 4.
FIG. 8 is a schematic structural view of the second pin shown in FIG. 7, viewed from another perspective.
FIG. 9 is a schematic structural view of a first lower plastic part of the end cover assembly shown in FIG. 4, viewed from another perspective.
FIG. 10 is a schematic structural view of a second lower plastic part of the end cover assembly shown in FIG. 4, viewed from another perspective.
FIG. 11 is an exploded schematic structural view of a partial structure of the end cover assembly shown in FIG. 4.
FIG. 12 is a partial schematic structural view of the end cover assembly shown in FIG. 11.

Description of reference numerals of the accompanying drawings:
energy storage device 1000; casing 200; opening 201; accommodation cavity 202; end cover assembly 100; end cover 10; upper surface 11; lower surface 12; first through hole 13; second through hole 14; first lower plastic part 20; first body 21; first top surface 211; first bottom surface 212; first protrusion 22; first protrusion surface 221; first assembly groove 23; first bottom wall surface 231; first side wall surface 232; first pole through hole 24; first positioning column 25; second lower plastic part 30; second body 31; second top surface 311; second bottom surface 312; second protrusion 32; second protrusion surface 321; second assembly groove 33; second bottom wall surface 331; second side wall surface 332; second pole through hole 34; second positioning column 35; first pin 40; first connection portion 41; first outer surface 411; first inner surface 412; first passage hole 413; first positioning hole 414; first adapter portion 42; first outer lateral surface 421; first inner lateral surface 422; first guide surface 423; first end surface 424; first side surface 425; first avoidance groove 44; first groove side wall 441; first groove bottom wall 442; first anti-slip groove 45; first wall surface 451; first groove surface 452; first bent portion 43; first outer arc surface 431; first inner arc surface 432; second pin 50; second connection portion 51; second outer surface 511; second inner surface 512; second passage hole 513; second positioning hole 514; second adapter portion 52; second outer lateral surface 521; second inner lateral surface 522; second guide surface 523; second end surface 524; second side surface 525; second avoidance groove 54; second groove side wall 541; second groove bottom wall 542; second anti-slip groove 55; second wall surface 551; second groove surface 552; second bent portion 53; second outer arc surface 531; second inner arc surface 532; first pole 60; second pole 70; first heat insulation member 80; first lateral heat insulation member 81; first end heat insulation member 82; second heat insulation member 90; second lateral heat insulation member 91; second end heat insulation member 92; cell 300; cell body 310; first tab 320; second tab 330; energy storage system 5000; first power conversion device 4100; second power conversion device 4200; first power consumption apparatus 3000; second power consumption apparatus 2000.

### DETAILED DESCRIPTION

Technical solutions will be clearly and completely described with reference to the accompanying drawings in the embodiments of the present disclosure. Obviously, the described embodiments are only part of the embodiments of the present disclosure, but not all the embodiments. Based on the embodiments in the present disclosure, all other embodiments obtained by those skilled in the art without inventive effort fall within the protection scope of the present disclosure.

In the present disclosure, unless otherwise clearly specified and limited, terms, such as "mounting", "connect", "connected to", and "fixed to" should be understood in a broad sense. For example, it may be a fixed connection, a detachable connection, or an integral connection; mechanical connection, electrical connection, or communicative connection; direct connection or indirect connection through an intermediate; or internal communication of two components or the interaction relationship between two components, unless otherwise specifically and explicitly defined.

It should be noted that the terms such as "first" and "second" are only used for descriptive purposes, and cannot be understood as indicating or implying relative importance or implicitly indicating the number of indicated technical features. Therefore, the features associated with "first" and "second" may explicitly or implicitly include one or more of the features.

Since energy required by people has strong temporality and spatiality, to reasonably utilize the energy and improve a utilization rate of the energy, it is necessary to use a medium or a device to store one form of energy in the same form of energy or convert the one form of energy into another form of energy. Then, the energy in a specific form of energy is released based on future application needs. As is well known, to achieve a major goal of carbon neutrality, currently a main way to generate green electricity is to develop green energy sources such as photovoltaic energy and wind power to replace fossil energy. At present, generation of green electricity generally relies on the photovoltaic energy, the wind power, hydro potential, etc. However, for wind energy and solar energy, problems such as strong intermittency and significant fluctuations are prevalent, which may cause instability of a power grid, insufficient electricity during peak load periods, excessive electricity during off-peak periods, and unstable voltage. The unstable voltage may also cause damage to power supply. Therefore, a problem of "abandoning wind and abandoning light" due to insufficient power demands or an insufficient grid accommodation capacity may occur. To solve these problems, energy storage needs to be relied upon. That is, energy is stored by converting electrical energy into other forms of energy through physical or chemical means, and released as the electrical energy when necessary. Simply put, energy storage is similar to a large-scale "power bank". When the photovoltaic energy and wind energy are sufficient, the electrical energy is stored. When necessary, the stored electricity is released.

Taking electrochemical energy storage as an example, the present disclosure provides an energy storage device. The energy storage device is equipped with a set of chemical batteries inside the energy storage device. A main purpose thereof is to use a chemical element within the chemical battery as an energy storage medium. During charging and discharging, a chemical reaction or change occurs in the energy storage medium. Simply speaking, the electrical energy generated by the wind energy and the solar energy is stored into the chemical battery, and then the stored electricity is released for use when external electrical energy usage reaches peak, or transferred to places where electricity is scarce for later use.

Currently, energy storage (i.e., energy accumulation) has a wide range of application scenarios, including (wind-solar) generation-side energy storage, power-grid-side energy storage, base-station-side energy storage, and user-side energy storage. The corresponding types of energy storage devices are as followings.
(1) A large energy storage container applied in a power-grid-side energy storage scenario, which may serve as a high-quality active and reactive power regulation power source in the power grid. In this way, load matching of the electrical energy in time and space can be realized, a consumption capacity of renewable energy can be enhanced, and great significance can be attached to power grid system backup, alleviation of a power supply pressure during peak loads, and peak shaving and frequency regulation.
(2) A small and medium-sized energy storage cabinet applied in a user-side commercial and industrial energy storage scenario (such as a bank, a shopping mall, etc.), whose main operation mode is "peak shaving and valley filling". Since there is a large price difference in an electricity cost between peak periods and valley periods according to a power demand, after a user has the energy storage device, the user usually charges the energy storage cabinet/container during low electricity price periods to reduce a cost. During high electricity price periods, electricity stored in the energy storage device is released for use, to save the electricity cost.

It should be noted that the above-mentioned apparatuses, such as the energy storage container, the small and medium-sized energy storage cabinet, and a household small energy storage box, that contain the energy storage devices may be understood as the power consumption apparatuses.

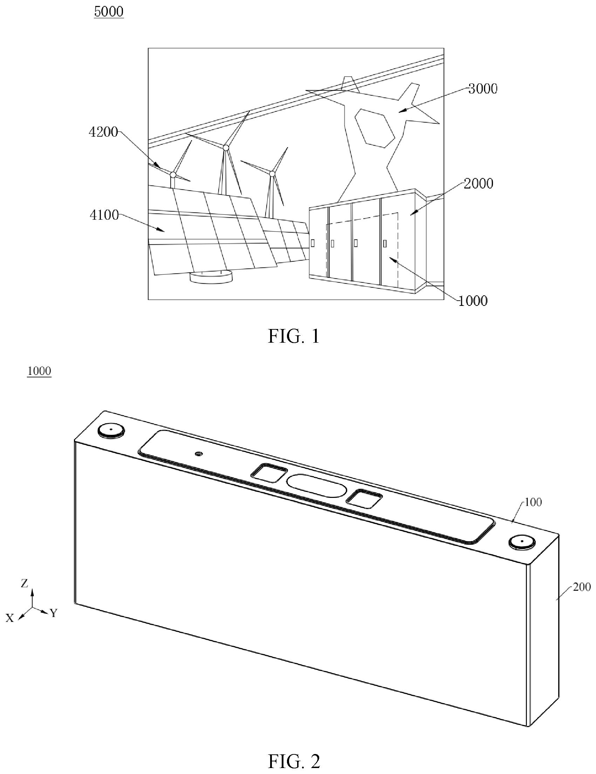

Reference can be made to FIG. 1. FIG. 1 is a schematic diagram of an application scenario of an energy storage device according to an embodiment of the present disclosure.

An energy storage device 1000 according to an embodiment of the present disclosure is applied to an energy storage system 5000. The energy storage system 5000 includes a first power conversion device 4100 (solar panel), a second power conversion device 4200 (wind turbine), a first power consumption apparatus 3000 (power grid), a second power consumption apparatus 2000 (base station), and the energy storage device 1000. The energy storage system 5000 further includes an energy storage cabinet. The energy storage device 1000 is mounted in the energy storage cabinet. The energy storage cabinet may be mounted outdoors. In an exemplary embodiment of the present disclosure, the first power conversion device 4100 may convert the solar energy into the electrical energy during periods of low electricity prices. The energy storage device 1000 is configured to store the electrical energy and supply the electrical energy to the first power consumption apparatus 3000 or the second power consumption apparatus 2000 during peak load periods, or to supply power when the first power consumption apparatus 3000 or the second power consumption apparatus 2000 experiences a power cut or a power outage. The second power conversion device 4200 may convert the wind energy into the electrical energy. The energy storage device 1000 is configured to store the electrical energy and supply the electrical energy to the first power consumption apparatus 3000 or the second power consumption apparatus 2000 during peak load periods, or to supply power when the first power consumption apparatus 3000 or the second power consumption apparatus 2000 experiences the power cut or the power outage. Transmission of the electrical energy may be performed using high-voltage cables.

It should be noted that the above-mentioned apparatuses, such as the first power consumption apparatus 3000 and the second power consumption apparatus 2000, that contain the energy storage device 1000 may be understood as the power consumption apparatuses. The energy storage device 1000 is configured to supply power to the power consumption apparatus.

A plurality of energy storage devices 1000 may be provided. The plurality of energy storage devices 1000 are connected in series or parallel with each other. In this embodiment, "plurality" refers to two or more.

It should be understood that the energy storage device 1000 may include, but is not limited to, a single battery, a battery module, a battery pack, a battery system, etc. An actual application form of the energy storage device 1000 according to the embodiment of the present disclosure may include, but is not limited to, the listed products, and may also be other application forms. For example, the energy storage device 1000 may be a secondary battery such as a nickel-hydrogen battery, a nickel-cadmium battery, a lead-acid (or lead-storage) battery, a lithium-ion battery, or a polymer lithium-ion battery. When the energy storage device 1000 is the single battery, the energy storage device 1000 may be a cylindrical battery, a prismatic battery, or a battery of other shapes. In this embodiment, the energy storage device 1000 is the prismatic battery, where the prismatic battery is the secondary battery.

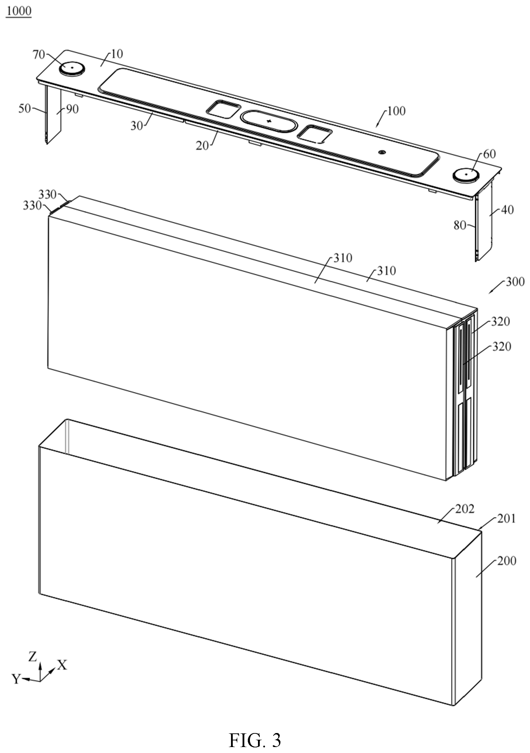

Reference can be made to FIG. 2 and FIG. 3. FIG. 2 is a schematic structural view of the energy storage device shown in FIG. 1. FIG. 3 is an exploded schematic view of a partial structure of the energy storage device shown in FIG. 2.

For ease of description, a width direction of the energy storage device 1000 is defined as an X-axis direction, a length direction as a Y-axis direction, and a height direction as a Z-axis direction. The X-axis direction, the Y-axis direction, and the Z-axis direction are perpendicular to each other pairwise.

The orientation terms such as "upper," "lower," "bottom," "right," and "left" mentioned in the description of the embodiments of the present disclosure are described based on the orientation shown in FIG. 2 of the specification, which do not limit the energy storage device 1000 in actual application scenarios. In an exemplary embodiment of the present disclosure, a direction facing towards a positive direction of a Z-axis is a top of the energy storage device 1000, and a direction facing towards a negative direction of the Z-axis is a bottom of the energy storage device 1000. In addition, terms such as "same," "equal," or "parallel" used below allow for a certain tolerance.

As illustrated in FIG. 2 and FIG. 3, the energy storage device 1000 includes a casing 200, an end cover assembly 100, and a cell 300. The casing 200 has an opening 201 and an accommodation cavity 202. The opening 201 is in communication with the accommodation cavity 202. The cell 300 is accommodated in the accommodation cavity 202. The end cover assembly 100 is mounted at an end of the cell 300 in a height direction (in the Z-axis direction) of the cell 300. In addition, the end cover assembly 100 is sealed at the opening 201 to isolate an internal environment of the energy storage device 1000 from an external environment of the energy storage device 1000.

As illustrated in FIG. 3, in this embodiment, the cell 300 includes a cell body 310 and a tab. The cell body 310 includes a first side surface and a second side surface. In a length direction of the cell body 310 (i.e., the Y-axis direction), the first side surface is opposite to the second side surface. The cell body 310 further includes a top surface connected to the first side surface and the second side surface. In addition, the top surface is configured to surface the opening 201 of the casing 200. In this embodiment, two cell main bodies 310 are provided. The two cell main bodies 310 are connected side by side in the Y-axis direction.

The tab includes a first tab 320 and a second tab 330. Both the first tab 320 and the second tab 330 are electrically connected to the cell body 310. The first tab 320 is led out from the first side surface of the cell body 310. The second tab 330 is led out from the second side surface of the cell body 310. In this embodiment, two first tabs 320 and two second tabs 330 are provided. The first tab 320 may be a positive tab. The second tab 330 may be a negative tab. Alternatively, the first tab 320 may be the negative tab. The second tab 330 may be the positive tab. When the end cover assembly 100 is not assembled with the cell 300, the two first tabs 320 extend away from the cell body 310 in the Y-axis direction and are opposite to each other and spaced apart from each other in the X-axis direction. The two second tabs 330 extend away from the cell body 310 in the Y-axis direction and are opposite to each other and spaced apart from each other in the X-axis direction. When the end cover assembly 100 is assembled with the cell 300, the two first tabs 320 are bent oppositely in the X-axis direction, and the two second tabs 330 are bent oppositely in the X-axis direction.

It should be noted that a structure of the cell 300 in the embodiment of the present disclosure may not be limited to the structure shown in FIG. 3, which may also be other forms of structures that meet assembly requirements with the end cover assembly 100. The present disclosure is not limited in this regard.

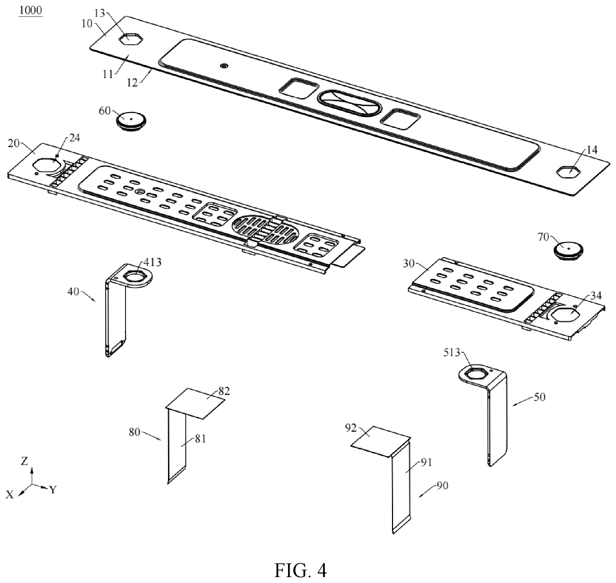

Reference can be made to FIG. 3 and FIG. 4. FIG. 4 is an exploded schematic structural view of an end cover assembly of the energy storage device shown in FIG. 3.

In this embodiment, the end cover assembly 100 includes an end cover 10, a lower plastic part, a first pin 40, a second pin 50, a first pole 60, a second pole 70, a first heat insulation member 80, and a second heat insulation member 90. The lower plastic part and the end cover 10 are stacked on each other in a height direction (i.e., the Z-axis direction) of the end cover assembly 100. A length of the lower plastic part is the same or substantially the same as that of the end cover 10. A width of the lower plastic part is the same or substantially the same as that of the end cover 10. The first pole 60 and the second pole 70 are located at two opposite ends of the end cover assembly 100 in a length direction of the end cover assembly 100, respectively. The first pole 60 is configured to extend through the end cover 10 and the lower plastic part and connected to the first pin 40. The second pole 70 is configured to extend through the end cover 10 and the lower plastic part and connected to the second pin 50. As illustrated in FIG. 3, the first pin 40 and the second pin 50 are located at two opposite ends of the cell 300 in a length direction (i.e., the Y-axis direction) of the cell 300, respectively. The first pin 40 is partially mounted at a side of the lower plastic part away from the end cover 10, and another part stacked with the first tab 320 and connected to the first tab 320. The first tab 320 is electrically connected to the first pole 60 via the first pin 40. The second pin 50 is partially mounted at the side of the lower plastic part away from the end cover 10, and another part stacked with the second tab 330 and connected to the second tab 330. The second tab 330 is electrically connected to the second pole 70 via the second pin 50. The first heat insulation member 80 is disposed between the first pin 40 and the cell body 310. The first heat insulation member 80 is stacked on and covers a surface of the first pin 40 facing towards the cell body 310 and a part of a surface of the lower plastic part. The first heat insulation member 80 has an adhesive connection surface with the first pin 40. The first heat insulation member 80 is configured to block heat conduction between the first pin 40 and the cell 300. The second heat insulation member 90 is disposed between the second pin 50 and the cell body 310. The second heat insulation member 90 is stacked on and covers a surface of the second pin 50 facing towards the cell body 310 and the part of the surface of the lower plastic part. The second heat insulation member 90 has an adhesive connection surface with the second pin 50. The second heat insulation member 90 is configured to block heat conduction between the second pin 50 and the cell 300.

In this embodiment, the end cover 10 is a polished aluminum part. The lower plastic part is made of an insulating material such as plastic. The first heat insulation member 80 and the second heat insulation member 90 may be, but are not limited to, high-temperature adhesive. The high-temperature adhesive has characteristics such as smoothness, low displacement tendency, high temperature resistance, a small volume, no reaction with an electrolyte, and heat transfer blocking. The high-temperature adhesive may be made of heat-insulating and non-shedding materials such as, but not limited to, polyimide tape, Teflon tape, or Teflon coating. The first pole 60 is a positive pole. The second pole 70 is a negative pole. Alternatively, the first pole 60 may be the negative pole. The second pole 70 may be the positive pole.

The end cover 10 includes an upper surface 11 and a lower surface 12. The upper surface 11 and the lower surface 12 are opposite to each other in a thickness direction (i.e., the Z-axis direction) of the end cover 10. The end cover 10 further includes a first through hole 13 and a second through hole 14. Both the first through hole 13 and the second through hole 14 extend through the upper surface 11 and the lower surface 12. The first through hole 13 and the second through hole 14 are located at two opposite ends of the end cover 10 in a length direction (i.e., the Y-axis direction) of the end cover 10, respectively. The first through hole 13 is used for the first pole 60 to pass through. The second through hole 14 is used for the second pole 70 to pass through. In this embodiment, the end cover 10 is substantially an elongated thin plate. Both the first through hole 13 and the second through hole 14 are substantially hexagonal holes. In some embodiments, the first through hole 13 and/or the second through hole 14 may also be, but not limited to, a circular hole, an elliptical hole, a rectangular hole, or the like.

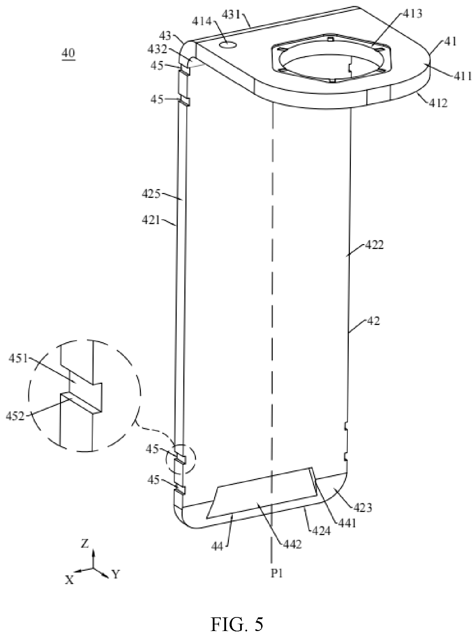

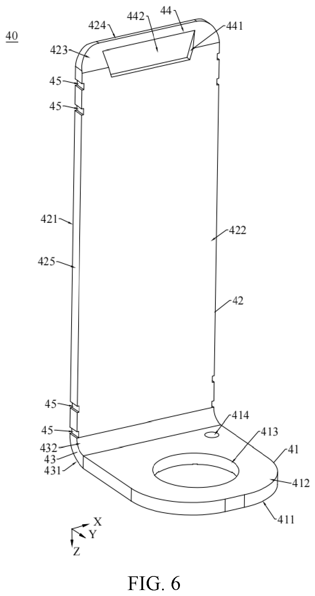

Reference can be made to FIG. 4, FIG. 5, and FIG. 6. FIG. 5 is a schematic structural view of a first pin of the end cover assembly shown in FIG. 4. FIG. 6 is a schematic structural view of the first pin shown in FIG. 5, viewed from another perspective.

In this embodiment, the first pin 40 is a metal sheet. The first pin 40 includes a first connection portion 41, a first adapter portion 42, and a first bent portion 43. The first bent portion 43 is connected to the first connection portion 41 and the first adapter portion 42. The first connection portion 41 and the first adapter portion 42 are angled with each other. The first connection portion 41 is configured for connection with the lower plastic part, and is configured to be fixed and electrically connected to the first pole 60 through welding. The first adapter portion 42 is configured to be fixed and electrically connected to the first tab 320 through welding. That is, the first pin 40 is configured to transfer a current of the cell 300 to the first pole 60 sequentially through the first adapter portion 42, the first bent portion 43, and the first connection portion 41. It should be understood that the first pin 40 is substantially an L-shaped bent structure. The first connection portion 41 and the first adapter portion 42 are located on different planes.

In an exemplary embodiment of the present disclosure, the first connection portion 41 includes a first outer surface 411 and a first inner surface 412. The first outer surface 411 and the first inner surface 412 are opposite to each other in a thickness direction (i.e., the Z-axis direction) of the first connection portion 41. The first inner surface 412 is configured to be connected to the first heat insulation member 80.

The first connection portion 41 further includes a first passage hole 413. The first passage hole 413 is configured to pass through the first outer surface 411 and the first inner surface 412. The first passage hole 413 is used for the first pole 60 to pass through. In this embodiment, a shape of the first connection portion 41 matches a shape of a first assembly groove 23. The first passage hole 413 is substantially a circular hole.

The first connection portion 41 further includes a first positioning hole 414. The first positioning hole 414 is configured to pass through the first outer surface 411 and the first inner surface 412. The first positioning hole 414 is spaced apart from the first passage hole 413. The first positioning hole 414 is configured to be engaged with the lower plastic part to position the first pin 40 relative to the lower plastic part. In this embodiment, the first positioning hole 414 is substantially the circular hole. One first positioning hole 414 is provided. In other embodiments, a plurality of first positioning holes 414 may be provided. The plurality of first positioning holes 414 are all disposed at a periphery of the first passage hole 413 and are arranged at intervals with the first passage hole 413.

In this embodiment, the first adapter portion 42 is a rectangular sheet. The first adapter portion 42 is substantially rectangular. A length direction of the first adapter portion 42 is the same or substantially the same as the Z-axis direction. The first adapter portion 42 has a first outer lateral surface 421, a first inner lateral surface 422, and a first guide surface 423. The first guide surface 423 is connected to the first inner lateral surface 422. The first guide surface 423, the first outer lateral surface 421, and the first inner lateral surface 422 are opposite to each other in a thickness direction (i.e., the Y-axis direction) of the first adapter portion 42. The first outer lateral surface 421 is connected to the first outer surface 411 of the first connection portion 41. The first inner lateral surface 422 is connected to the first inner surface 412 of the first connection portion 41.

The first adapter portion 42 further includes a first end surface 424 and two first side surfaces 425. The two first side surfaces 425 are opposite to each other in a width direction (i.e., the X-axis direction) of the first adapter portion 42. Each of the two first side surfaces 425 is connected to the first outer lateral surface 421 and the first inner lateral surface 422. The first end surface 424 is connected to the first outer lateral surface 421, the first guide surface 423, and the two first side surfaces 425. The first end surface 424 is an end surface of the first adapter portion 42 away from the first connection portion 41. It should be understood that in the Z-axis direction, the first guide surface 423 is farther away from the first connection portion 41 than the first inner lateral surface 422. The first guide surface 423 is a part of the first inner lateral surface 422.

In this embodiment, the first guide surface 423 is an inclined surface. In the length direction of the first adapter portion 42, the first guide surface 423 is inclined away from the first inner lateral surface 422.

The first adapter portion 42 further includes a first avoidance groove 44 recessed from the first guide surface 423 and the first inner lateral surface 422. In addition, the first avoidance groove 44 is recessed towards the first outer lateral surface 421. It should be understood that the first avoidance groove 44 is partially recessed from the first guide surface 423, and another part recessed from the first inner lateral surface 422. The first avoidance groove 44 includes three first groove side walls 441 and a first groove bottom wall 442. In this embodiment, the first groove bottom wall 442 has the same orientation as that of the first inner lateral surface 422. In other embodiments, the first groove bottom wall 442 may be inclined. The three first groove side walls 441 are all connected to an edge of the first groove bottom wall 442, the first inner lateral surface 422, and the first guide surface 423. The groove bottom wall 442 is connected to the first guide surface 423 at an edge of the groove bottom wall 442 away from the first inner lateral surface 422. The groove bottom wall 442 is angled with the first guide surface 423. In addition, the first groove bottom wall 442 is angled with each of the three first groove side walls 441. The three first groove side walls 441 are connected in sequence and angled to each other. Two first groove side walls 441 of the three first groove side walls 441 are opposite to each other and spaced apart from each other in a length direction (i.e., the X-axis direction) of the first avoidance groove 44. In addition, each of the two first groove side walls 441 of the three first groove side walls 441 is connected to the first guide surface 423 and the first inner lateral surface 422. The remaining one of the three first groove side walls 441 is connected between the two first groove side walls 441 and connected to the first inner lateral surface 422.

In this embodiment, the first avoidance groove 44 is a trapezoidal groove. The first groove bottom wall 442 is a trapezoidal surface. In addition, a long side of the trapezoidal surface is located closer to the first end surface 424 than a short side of the trapezoidal surface. The two first groove side walls 441 in the length direction of the first avoidance groove 44 are both trapezoidal. In addition, the two first groove side walls 441 are inclined away from the first end surface 424 in the length direction of the first adapter portion 42. In the length direction of the first adapter portion 42 and in a direction from the first end surface 424 towards the first connection portion 41, a distance between the two first groove side walls 441 oppositely arranged gradually decreases.

The first adapter portion 42 further includes a first anti-slip groove 45. The first anti-slip groove 45 is recessed towards the inside of the first adapter portion 42 from the first side surface 425. The first anti-slip groove 45 extends through the first outer lateral surface 421 and the first inner lateral surface 422. The first anti-slip groove 45 has three notches located on the first side surface 425, the first outer lateral surface 421, and the first inner lateral surface 422, respectively. The first anti-slip groove 45 includes a first wall surface 451 and two first groove surfaces 452. The first wall surface 451 is opposite to a notch located on the first side surface 425. The two first groove surfaces 452 are connected to the first wall surface 451, the first outer lateral surface 421, the first inner lateral surface 422, and the first side surface 425. Each of the two first groove surfaces 452 is angled with the first wall surface 451, the first outer lateral surface 421, the first inner lateral surface 422, and the first side surface 425.

In this embodiment, the first anti-slip groove 45 is substantially a rectangular open through groove. A plurality of first anti-slip grooves 45 are provided. The plurality of first anti-slip grooves 45 are distributed on the two first side surfaces 425 of the first adapter portion 42. In addition, a number of the first anti-slip groove 45 on each of the two first side surfaces 425 is the same. Several first anti-slip grooves 45 on one first side surface 425 of the first adapter portion 42 are arranged at intervals in the length direction of the first adapter portion 42. Several first anti-slip grooves 45 on the same first side surface 425 of the first adapter portion 42 are formed at two opposite ends of the first adapter portion 42 in the length direction of the first adapter portion 42. Exemplarily, eight first anti-slip grooves 45 are provided. Four first anti-slip grooves 45 of the eight first anti-slip grooves 45 are located at a side of the first adapter portion 42 in the width direction of the first adapter portion 42. In addition, the four first anti-slip grooves 45 are located at two opposite ends of the first side surface 425 in a length direction of the first side surface 425, respectively. Another four first anti-slip grooves 45 of the eight first anti-slip grooves 45 are located at another side of the first adapter portion 42 in the width direction of the first adapter portion 42. In addition, the other four first anti-slip grooves 45 of the eight first anti-slip grooves 45 are located at the two opposite ends of the first side surface 425 in the length direction of the first side surface 425, respectively. In one embodiment, the plurality of first anti-slip grooves 45 are symmetrically arranged with respect to a central axis P1 extending in the length direction of the adapter portion 42, to ensure stress stability when in contact with the first heat insulation member 80.

In this embodiment, the first bent portion 43 is substantially an arc-shaped plate. The first bent portion 43 includes a first outer arc surface 431 and a first inner arc surface 432. The first outer arc surface 431 and the first inner arc surface 432 are opposite to each other in a thickness direction of the first bent portion 43. The first outer arc surface 431 is connected to the first outer surface 411 and the first outer lateral surface 421. The first inner arc surface 432 is connected to the first inner surface 412 and the first side inner surface 422.

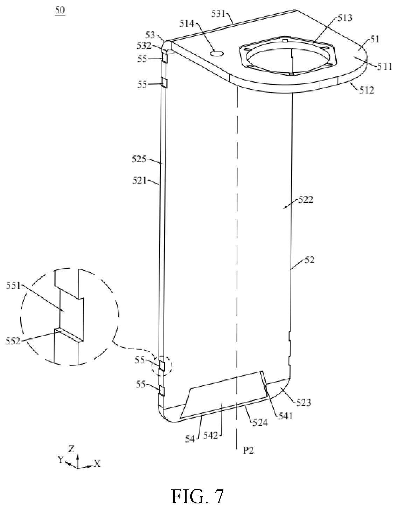

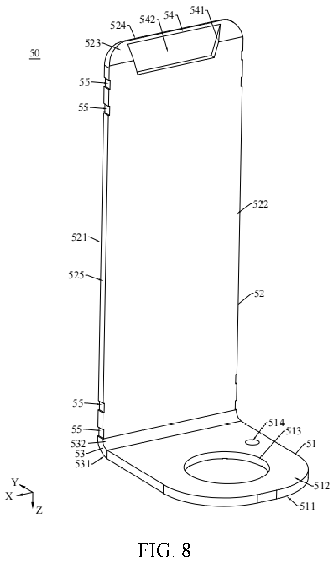

Reference can be made to FIG. 4, FIG. 7, and FIG. 8. FIG. 7 is a schematic structural view of a second pin of the end cover assembly shown in FIG. 4. FIG. 8 is a schematic structural view of the second pin shown in FIG. 7, viewed from another perspective.

In this embodiment, a structure of the second pin 50 is similar to that of the first pin 40. The second pin 50 is the metal sheet. The second pin 50 includes a second connection portion 51, a second adapter portion 52, and a second bent portion 53. The second bent portion 53 is connected to the second connection portion 51 and the second adapter portion 52. The second connection portion 51 is angled with the second adapter portion 52. The second connection portion 51 is configured for connection with the lower plastic part, and is configured to be fixed and electrically connected to the second pole 70 through welding. The second adapter portion 52 is configured to be fixed and electrically connected to the second tab 330 through welding. That is, the second pin 50 is configured to transfer the current of the cell 300 to the second pole 70 sequentially through the second adapter portion 52, the second bent portion 53, and the second connection portion 51. It should be understood that the second pin 50 is substantially the L-shaped bent structure. The second connection portion 51 and the second adapter portion 52 are located at different planes.

In an exemplary embodiment of the present disclosure, the second connection portion 51 includes a second outer surface 511 and a second inner surface 512. The second outer surface 511 and the second inner surface 512 are opposite to each other in a thickness direction (i.e., the Z-axis direction) of the second connection portion 51. The second inner surface 512 is configured for connection with the second heat insulation member 90.

The second connection portion 51 further includes a second passage hole 513. The second passage hole 513 is configured to pass through the second outer surface 511 and the second inner surface 512. The second passage hole 513 is used for the second pole 70 to pass through. In this embodiment, a shape of the second connection portion 51 matches a shape of the second assembly groove 33. The second passage hole 513 is substantially the circular hole.

The second connection portion 51 further includes a second positioning hole 514. The second positioning hole 514 is configured to pass through the second outer surface 511 and the second inner surface 512. The second positioning hole 514 is spaced apart from the second passage hole 513. The second positioning hole 514 is configured to be engaged with the lower plastic part to position the second pin 50 relative to the lower plastic part. In this embodiment, the second positioning hole 514 is substantially the circular hole. One second positioning hole 514 is provided. In other embodiments, a plurality of second positioning holes 514 may be provided. The plurality of second positioning holes 514 are all disposed at a periphery of the second passage hole 513 and are spaced apart from the second passage hole 513.

In this embodiment, the second adapter portion 52 is the rectangular sheet. The second adapter portion 52 is substantially rectangular. A length direction of the second adapter portion 52 is consistent with or substantially the same as the Z-axis direction. The second adapter portion 52 includes a second outer lateral surface 521, a second inner lateral surface 522, and a second guide surface 523. The second guide surface 523 is connected to the second inner lateral surface 522. In addition, the second guide surface 523, the second outer lateral surface 521, and the second inner lateral surface 522 are opposite to each other in a thickness direction (i.e., the Y-axis direction) of the second adapter portion 52. The second outer lateral surface 521 is connected to the second outer surface 511 of the second connection portion 51. The second inner lateral surface 522 is connected to the second inner surface 512 of the second connection portion 51.

The second adapter portion 52 further includes a second end surface 524 and two second side surfaces 525. The two second side surfaces 525 are opposite to each other in a width direction (i.e., the X-axis direction) of the second adapter portion 52. Each of the two second side surfaces 525 is connected to the second outer lateral surface 521 and the second inner lateral surface 522. The second end surface 524 is connected to the second outer lateral surface 521, the second guide surface 523, and the two second side surfaces 525. The second end surface 524 is an end surface of the second adapter portion 52 away from the second connection portion 51. It should be understood that in the Z-axis direction, the second guide surface 523 is farther away from the second connection portion 51 than the second inner lateral surface 522. The second guide surface 523 is a part of the second inner lateral surface 522.

In this embodiment, the second guide surface 523 is the inclined surface. In the length direction of the second adapter portion 52, the second guide surface 523 is inclined towards the second outer lateral surface 521.

The second adapter portion 52 further includes a second avoidance groove 54. The second avoidance groove 54 is recessed from the second guide surface 523 and the second inner lateral surface 522, and is recessed towards the second outer lateral surface 521. It should be understood that the second avoidance groove 54 is partially recessed from the second guide surface 523, and another part recessed from the second inner lateral surface 522. The second avoidance groove 54 includes three second groove side walls 541 and a second groove bottom wall 542. In this embodiment, the second groove bottom wall 542 has the same orientation as that of the second inner lateral surface 522. In other embodiments, the second groove bottom wall 542 may be inclined. The three second groove side walls 541 are all connected to an edge of the second groove bottom wall 542, the second inner lateral surface 522, and the second guide surface 523. The second groove bottom wall 542 is connected to the second guide surface 523 at an edge of the second groove bottom wall 542 away from the second inner lateral surface 522. The second groove bottom wall 542 is angled with the second guide surface 523. In addition, the second groove bottom wall 542 is angled with each of the three second groove side walls 541. The three second groove side walls 541 are connected in sequence and angled with each other. Two second groove side walls 541 of the three second groove side walls 541 are opposite to each other and spaced apart from each other in a length direction (i.e., the X-axis direction) of the second avoidance groove 54. In addition, each of the two second groove side walls 541 of the three second groove side walls 541 is connected to the second guide surface 523 and the second inner lateral surface 522. The remaining one of the three second groove side walls 541 is connected between the two second groove side walls 541 and connected to the second inner lateral surface 522.

In this embodiment, the second avoidance groove 54 is the trapezoidal groove. The second groove bottom wall 542 is the trapezoidal surface. In addition, a long side of the trapezoidal surface is located closer to the second end surface 524 than a short side of the trapezoidal surface. The two second groove side walls 541 in the length direction of the second avoidance groove 54 are both trapezoidal. In addition, the two second groove side walls 541 are inclined away from the second end surface 524 in the length direction of the second adapter portion 52. In the length direction of the second adapter portion 52 and in a direction from the second end surface 524 towards the second connection portion 51, a distance between the two second groove side walls 541 oppositely arranged gradually decreases.

The second adapter portion 52 further includes a second anti-slip groove 55. The second anti-slip groove 55 is recessed towards the inside of the second adapter portion 52 from the second side surface 525. The second anti-slip groove 55 extends through the second outer lateral surface 521 and the second inner lateral surface 522. It should be understood that the second anti-slip groove 55 has three notches located on the second side surface 525, the second outer lateral surface 521, and the second inner lateral surface 522, respectively. The second anti-slip groove 55 includes a second wall surface 551 and two second groove surfaces 552. The second wall surface 551 is opposite to a notch located on the second side surface 525. The two second groove surfaces 552 are connected to the second wall surface 551, the second outer lateral surface 521, the second inner lateral surface 522, and the second side surface 525. Each of the two second groove surfaces 552 is angled with the second wall surface 551, the second outer lateral surface 521, the second inner lateral surface 522, and the second side surface 525.

In this embodiment, the second anti-slip groove 55 is substantially a rectangular open through groove. A plurality of second anti-slip grooves 55 are provided. The plurality of second anti-slip grooves 55 are distributed on the two second side surfaces 525 of the second adapter portion 52. In addition, a number of the second anti-slip groove 55 on each of the two second side surfaces 525 is the same. Several second anti-slip grooves 55 on one second side surface 525 of the second adapter portion 52 are arranged at intervals in the length direction of the second adapter portion 52. Several second anti-slip grooves 55 on the same second side surface 525 of the second adapter portion 52 are located at two opposite ends of the second adapter portion 52 in the length direction of the second adapter portion 52. Exemplarily, eight second anti-slip grooves 55 are provided. Four second anti-slip grooves 55 of the eight second anti-slip grooves 55 are located at a side of the second adapter portion 52 in the width direction of the second adapter portion 52. In addition, the four second anti-slip grooves 55 are located at two opposite ends of the second side surface 525 in a length direction of the second side surface 525, respectively. Another four second anti-slip grooves 55 of the eight second anti-slip grooves 55 are located at another side of the second adapter portion 52 in the width direction of the second adapter portion 52. In addition, the other four second anti-slip grooves 55 are located at the two opposite ends of the second side surface 525 in the length direction of the second side surface 525, respectively. In one embodiment, the plurality of second anti-slip grooves 55 are symmetrically arranged with respect to a middle axis P2 of the second adapter portion 52 extending in the length direction of the second adapter portion 52, to ensure stress stability when in contact with the second heat insulation member 90.

In this embodiment, the second bending portion 53 is substantially the arc-shaped plate. The second bending portion 53 includes a second outer arc surface 531 and a second inner arc surface 532. The second outer arc surface 531 and the second inner arc surface 532 are opposite to each other in a thickness direction of the second bending portion 53. The second outer arc surface 531 is connected to the second outer surface 511 and the second outer lateral surface 521. The second inner arc surface 532 is connected to the second inner surface 512 and the second inner lateral surface 522.

In this embodiment, each of a depth of the first anti-slip groove 45 and a depth of the second anti-slip groove 55 is greater than or equal to 0.05 mm and smaller than or equal to 3 mm. An excessively shallow depth of the first anti-slip groove 45 and an excessively shallow depth of the second anti-slip groove 55 are avoided, which may easily generate metal wires during anti-slip groove formation. Such wires may later fall off as metal debris and enter the battery, affecting battery performance. An excessively deep depth of the first anti-slip groove 45 and an excessively deep depth of the second anti-slip groove 55 are avoided, which may affect a current-carrying capacity while causing heat accumulation and thus significant heating, leading to reduced battery energy efficiency.

Continuous reference can be made to FIG. 4.

In this embodiment, the lower plastic part includes a first lower plastic part 20 and a second lower plastic part 30. The first lower plastic part 20 and the second lower plastic part 30 adopt a split structure. In other embodiments, the first lower plastic part 20 and the second lower plastic part 30 may also adopt an integrated structure. The first lower plastic part 20 has a length greater than a length of the second lower plastic part 30, and a width equal to a width of the second lower plastic part 30. A sum of the length of the first lower plastic part 20 and the length of the second lower plastic part 30 is equal to the length of the lower plastic part.

A structure of the first lower plastic part 20 and a structure of the second lower plastic part 30 are described in detail below.

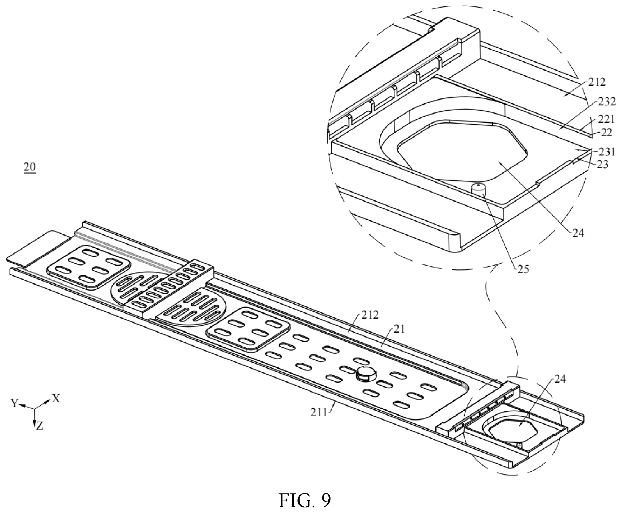

Reference can be made to FIG. 4 and FIG. 9. FIG. 9 is a schematic structural view of a first lower plastic part of the end cover assembly shown in FIG. 4, viewed from another perspective.

In this embodiment, the first lower plastic part 20 is the elongated thin plate. The first lower plastic part 20 includes a first body 21. The first body 21 includes a first top surface 211 and a first bottom surface 212. The first top surface 211 and the first bottom surface 212 are opposite to each other in a thickness direction (i.e., the Z-axis direction) of the first body 21.

The first lower plastic part 20 further includes a first protrusion 22. The first body 21 is provided with the first protrusion 22 protruding from the first bottom surface 212 of the first body 21. The first protrusion 22 is located at an end of the first lower plastic part 20 in a length direction (i.e., the Y-axis direction) of the first lower plastic part 20. The first protrusion 22 includes a first protrusion surface 221. The first protrusion surface 221 is configured to face away from the first body 21 and has the same orientation as the first bottom surface 212. In this embodiment, the first protrusion 22 is substantially a rectangular protrusion. The first protrusion 22 has a width smaller than a width of the first body 21, and a length smaller than the width of the first body 21.

The first lower plastic part 20 further includes a first assembly groove 23. The first assembly groove 23 is recessed on the first protrusion surface 221 of the first protrusion 22 and is recessed towards the first body 21. The first assembly groove 23 is configured to accommodate the first connection portion 41 of the first pin 40. The first assembly groove 23 has the same depth as the first connection portion 41 or substantially the same depth as the first connection portion 41. A shape of the first assembly groove 23 matches the shape of the first connection portion 41. The first assembly groove 23 includes a first bottom wall surface 231 and a first side wall surface 232. The first bottom wall surface 231 has the same orientation as the first bottom surface 212. The first side wall surface 232 is configured to surround a periphery of the first bottom wall surface 231 and is connected to the first bottom wall surface 231. The first side wall surface 232 and the first bottom wall surface 231 are angled with each other.

The first lower plastic part 20 further includes a first pole through hole 24. The first pole through hole 24 is configured to pass through the first bottom wall surface 231 of the first assembly groove 23 and the first top surface 211 of the first body 21. The first pole through hole 24 is configured for the first pole 60 to pass through. In this embodiment, the first pole through hole 24 is a hexagonal hole. In some embodiments, the first pole through hole 24 may also be, but not limited to, the circular hole, the elliptical hole, the rectangular hole, or the like.

The first lower plastic part 20 further includes a first positioning column 25. The first assembly groove 23 is provided with the first positioning column 25 protruding from the first bottom wall surface 231 of the first assembly groove 23. The first positioning column 25 is spaced apart from an edge of the first pole through hole 24. The first positioning column 25 is configured to pass through the first positioning hole 414 of the first pin 40. In this embodiment, the first positioning column 25 is cylindrical. One first positioning column 25 is provided. In some embodiments, a plurality of first positioning columns 25 may be provided. The present disclosure is not limited in this regard.

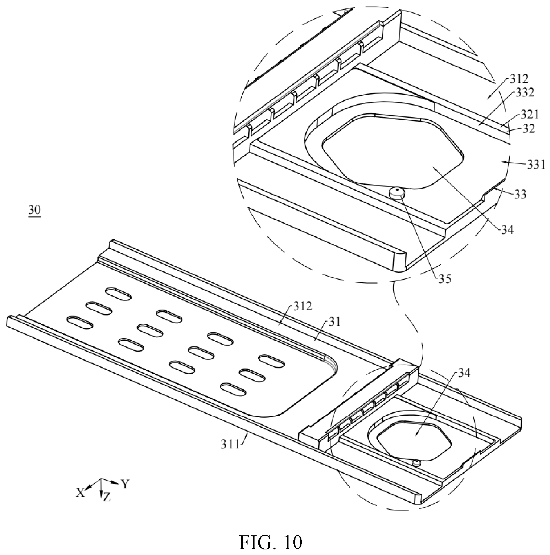

Reference can be made to FIG. 4 and FIG. 10. FIG. 10 is a schematic structural view of a second lower plastic part of the end cover assembly shown in FIG. 4, viewed from another perspective.

In this embodiment, the structure of the second lower plastic part 30 is similar to that of the first lower plastic part 20. The second lower plastic part 30 is the elongated thin plate. The second lower plastic part 30 includes a second body 31. The second body 31 includes a second top surface 311 and a second bottom surface 312. The second top surface 311 and the second bottom surface 312 are opposite to each other in a thickness direction (i.e., the Z-axis direction) of the second body 31.

The second lower plastic part 30 further includes a second protrusion 32. The second body 31 is provided with the second protrusion 32 protruding from the second bottom surface 312 of the second body 31. The second protrusion 32 is located at an end of the second lower plastic part 30 in a length direction (i.e., the Y-axis direction) of the second lower plastic part 30. The second protrusion 32 includes a second protrusion surface 321. The second protrusion surface 321 is configured to face away from the second body 31 and has the same orientation as the second bottom surface 312. In this embodiment, the second protrusion 32 is substantially the rectangular protrusion. The second protrusion 32 has a width smaller than a width of the second body 31, and a length smaller than the width of the second body 31.

The second lower plastic part 30 further includes a second assembly groove 33. The second assembly groove 33 is recessed on the second protrusion surface 321 of the second protrusion 32 and is recessed towards the second body 31. The second assembly groove 33 is configured to accommodate the second connection portion 51 of the second pin 50. The second assembly groove 33 has the same depth as the second connection portion 51 or substantially the same depth as the second connection portion 51. A shape of the second assembly groove 33 matches the shape of the second connection portion 51. The second assembly groove 33 includes a second bottom wall surface 331 and a second side wall surface 332. The second bottom wall surface 331 has the same orientation as the second bottom surface 312. The second side wall surface 332 is configured to surround a periphery of the second bottom wall surface 331 and is connected to the second bottom wall surface 331. The second side wall surface 332 and the second bottom wall surface 331 are angled with each other.

The second lower plastic part 30 further includes a second pole through hole 34. The second pole through hole 34 is configured to pass through the second bottom wall surface 331 of the second assembly groove 33 and the second top surface 311 of the second body 31. The second pole through hole 34 is configured for the second pole 70 to pass through. In this embodiment, the second pole through hole 34 is the hexagonal hole. In some embodiments, the second pole through hole 34 may also be, but not limited to, the circular hole, the elliptical hole, the rectangular hole, or the like.

The second lower plastic part 30 further includes a second positioning column 35. The second assembly groove 33 is provided with the second positioning column 35 protruding from the second bottom wall surface 331 of the second assembly groove 33. The second positioning column 35 is spaced apart from an edge of the second pole through hole 34. The second positioning column 35 is configured to pass through the second positioning hole 514 of the second pin 50. In this embodiment, the second positioning column 35 is cylindrical. One second positioning column 35 is provided. In some embodiments, a plurality of second positioning columns 35 may be provided. The present disclosure is not limited in this regard.

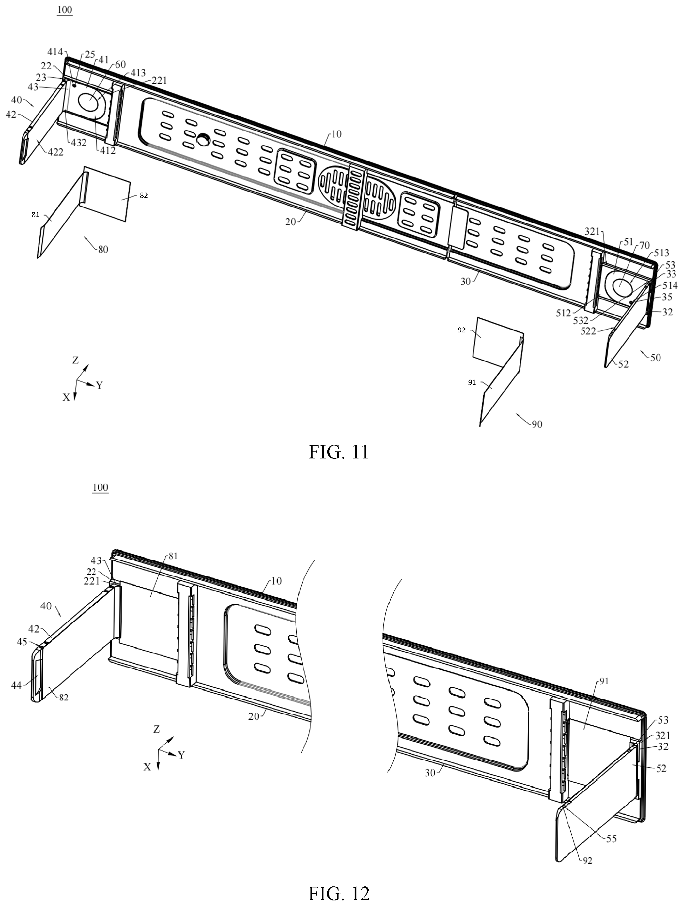

Reference can be made to FIG. 4, FIG. 11, and FIG. 12. FIG. 11 is an exploded schematic structural view of a partial structure of the end cover assembly shown in FIG. 4. FIG. 12 is a partial schematic structural view of the end cover assembly shown in FIG. 11.

In this embodiment, as illustrated in FIG. 4 and FIG. 11, the first lower plastic part 20 and the second lower plastic part 30 are mounted at the end cover 10 together. The sum of the length of the first lower plastic part 20 and the length of the second lower plastic part 30 is smaller than or equal to a length of the end cover 10. Each of the width of the first lower plastic part 20 and the width of the second lower plastic part 30 is smaller than or equal to a width of the end cover 10. In an exemplary embodiment of the present disclosure, in the Y-axis direction, the first lower plastic part 20 is located at an end of the second lower plastic part 30 away from the second protrusion 32. An end of the first lower plastic part 20 away from the first protrusion 22 is connected to the end of the second lower plastic part 30 away from the second protrusion 32. The first bottom surface 212 of the first lower plastic part 20 has the same orientation as the second bottom surface 312 of the second lower plastic part 30. In addition, the first bottom surface 212 and the second bottom surface 312 jointly form a bottom surface of the lower plastic part. The first top surface 211 of the first lower plastic part 20 has the same orientation as the second top surface 311 of the second lower plastic part 30. In addition, the first top surface 211 and the second top surface 311 jointly form a top surface of the lower plastic part. The top surface of the lower plastic part is connected to a lower surface 12 of the end cover 10. The first pole through hole 24 of the first lower plastic part 20 is coaxially arranged with and in communication with the first through hole 13 of the end cover 10. The second pole through hole 34 of the second lower plastic part 30 is coaxially arranged with and in communication with the second through hole 14 of the end cover 10.

The first pin 40 is mounted at a side of the first lower plastic part 20 away from the end cover 10. The first connection portion 41 of the first pin 40 is accommodated in the first assembly groove 23 of the first lower plastic part 20. The first outer surface 411 of the first connection portion 41 is connected to the first bottom wall surface 231 of the first assembly groove 23. The first positioning column 25 of the first lower plastic part 20 is configured to pass through the first positioning hole 414 of the first connection portion 41, to limit the first pin 40 to and fix the first pin 40 at the first lower plastic part 20. The first passage hole 413 of the first connection portion 41 is coaxially arranged with and in communication with the first pole through hole 24 of the first lower plastic part 20. The first bending portion 43 is bent away from the first lower plastic part 20. The first adapter portion 42 extends away from the first lower plastic part 20.

The first pole 60 passes through the first through hole 13 of the end cover 10, the first pole through hole 24 of the first lower plastic part 20, and a first passage hole 413 of the first pin 40 in sequence. The first pole 60 is insulated from the end cover 10 by an insulating member, to avoid a short circuit between the first pole 60 and the end cover 10. In addition, the first pole 60 is sealed with the end cover 10 and the first lower plastic part 20 by a seal, to prevent an electrolyte inside the energy storage device 1000 from flowing out of the energy storage device 1000 through a gap between the first lower plastic part 20, the end cover 10, and the first pole 60, ensuring safety of the end cover assembly 100. A peripheral side of the first pole 60 is configured to abut with a hole wall of the first passage hole 413. The first pole 60 is fixed to the first connection portion 41 by means of laser welding, and electrical conduction between the first pole 60 and the first pin 40 is achieved.

The second pin 50 is mounted at a side of the second lower plastic part 30 away from the end cover 10. The second connection portion 51 of the second pin 50 is accommodated in the second assembly groove 33 of the second lower plastic part 30. The second outer surface 511 of the second connection portion 51 is connected to a second groove bottom wall 542 of the second assembly groove 33. The second positioning column 35 of the second lower plastic part 30 passes through the second positioning hole 514 of the second connection portion 51, to limit the second pin 50 to and fix the second pin 50 at the second lower plastic part 30. The second passage hole 513 of the second connection portion 51 is coaxially arranged with and in communication with the second pole through hole 34 of the second lower plastic part 30. The second bending portion 53 is bent away from the second lower plastic part 30. The second adapter portion 52 extends away from the second lower plastic part 30. In addition, the second inner lateral surface 522 of the second adapter portion 52 is opposite to and spaced apart from the first inner lateral surface 422 of the first adapter portion 42 in the Y-axis direction.

The second pole 70 passes through the second through hole 14 of the end cover 10, the second pole through hole 34 of the second lower plastic part 30, and a second passage hole 513 of the second pin 50 in sequence. The second pole 70 is insulated from the end cover 10 by the insulating member, to avoid a short circuit between the second pole 70 and the end cover 10. In addition, the second pole 70 is sealed with the end cover 10 and the second lower plastic part 30 by the seal, to prevent the electrolyte inside the energy storage device 1000 from flowing out of the energy storage device 1000 through a gap between the second lower plastic part 30, the end cover 10, and the second pole 70, ensuring the safety of the end cover assembly 100. A peripheral side of the second pole 70 is configured to abut with a hole wall of the second passage hole 513. The second pole 70 is fixed to the second connection portion 51 by means of laser welding, and electrical conduction between the second pole 70 and the second pin 50 is achieved.

As illustrated in FIG. 11 and FIG. 12, the first heat insulation member 80 covers a side of the first pin 40 away from the first lower plastic part 20. The first heat insulation member 80 includes a first lateral heat insulation member 81 and a first end heat insulation member 82. In this embodiment, the first lateral heat insulation member 81 is connected to the first end heat insulation member 82. In addition, the first lateral heat insulation member 81 and the first end heat insulation member 82 are angled with each other. The first lateral heat insulation member 81 covers the first inner lateral surface 422 of the first adapter portion 42, and the first inner arc surface 432 of the first bending portion 43. The first lateral heat insulation member 81 is configured to separate the first adapter portion 42 and the first bending portion 43 from the cell body 310. The first end heat insulation member 82 covers the first inner surface 412 of the first connection portion 41. The first end heat insulation member 82 is configured to separate the first connection portion 41 from the cell body 310.

It should be understood that the first end heat insulation member 82 and the first lateral heat insulation member 81 partially overlap with each other and have an overlapping region. The overlapping region is located within the first connection portion 41. The overlapping region may be regarded as a thickened region of the first heat insulation member 80, to enhance adhesion reliability between the first heat insulation member 80 and the first pin 40, and also better block heat conduction from the first pin 40 towards the cell body 310.

In some embodiments, the first lateral heat insulation member 81 is spaced apart from the first end heat insulation member 82. That is, the first heat insulation member 80 is an intermittent film layer as a whole. The first lateral heat insulation member 81 is located at the first adapter portion 42. The first end heat insulation member 82 is partially located at the first connection portion 41.

In this embodiment, in the Z-axis direction, the first end heat insulation member 82 completely covers the first assembly groove 23. That is, the first end heat insulation member 82 completely covers the first connection portion 41 and the first pole 60. The first end heat insulation member 82 is configured to separate the first connection portion 41 and the first pole 60 from the cell body 310. That is, in the Z-axis direction, a projection of the first connection portion 41 and a projection of the first pole 60 are completely located within a projection of the first end heat insulation member 82.

In the Y-axis direction, the first lateral heat insulation member 81 covers the first inner lateral surface 422 of the first adapter portion 42 and avoids the first avoidance groove 44. At least part of a projection of the first anti-slip groove 45 of the first adapter portion 42 is located within a coverage of the first lateral heat insulation member 81. That is, the first lateral heat insulation member 81 may cover a part of a notch of the first anti-slip groove 45 formed on the first inner lateral surface 422, or may completely cover the notch of the first anti-slip groove 45 formed on the first inner lateral surface 422. Moreover, projections of at least part of the first anti-slip grooves 45 among the plurality of first anti-slip grooves 45 are located within a coverage of the first lateral heat insulation member 81. After the first lateral heat insulation member 81 is bonded to the first adapter portion 42 and the first tab 320 wraps the first adapter portion 42, an overlapping part between the first lateral heat insulation member 81 and the first anti-slip groove 45 may bend towards the inside of the first anti-slip groove 45. When the first lateral heat insulation member 81 is poorly bonded to the first adapter portion 42, the first anti-slip groove 45 may serve as a force application point, to facilitate tearing off the first lateral heat insulation member 81 or even an entire first heat insulation member 80 for rework.

The second heat insulation member 90 covers a side of the second pin 50 away from the second lower plastic part 30. The second heat insulation member 90 includes a second lateral heat insulation member 91 and a second end heat insulation member 92. In this embodiment, the second lateral heat insulation member 91 is connected to the second end heat insulation member 92. In addition, the second lateral heat insulation member 91 and the second end heat insulation member 92 are angled with each other. The second lateral heat insulation member 91 covers the second inner lateral surface 522 of the second adapter portion 52, and the second inner arc surface 532 of the second bending portion 53. The second lateral heat insulation member 91 is configured to separate the second adapter portion 52 and the second bending portion 53 from the cell body 310. The second end heat insulation member 92 covers the second inner surface 512 of the second connection portion 51. The second end heat insulation member 92 is configured to separate the second connection portion 51 from the cell body 310.

It should be understood that the second end heat insulation member 92 and the second lateral heat insulation member 91 partially overlap with each other and have an overlapping region. The overlapping region is located within the second connection portion 51. The overlapping region may be regarded as a thickened region of the second heat insulation member 90, to enhance adhesion reliability between the second heat insulation member 90 and the second pin 50, and also better block heat conduction from the second pin 50 towards the cell body 310.

In some embodiments, the second lateral heat insulation member 91 is spaced apart from the second end heat insulation member 92. That is, the second heat insulation member 90 is the intermittent film layer as a whole. The second lateral heat insulation member 91 is located at the second adapter portion 52. The second end heat insulation member 92 is located at the second connection portion 51.

In this embodiment, in the Z-axis direction, the second end heat insulation member 92 completely covers the second assembly groove 33. That is, the second end heat insulation member 92 completely covers the second connection portion 51 and the second pole 70. The second end heat insulation member 92 is configured to separate the second connection portion 51 and the second pole 70 from the cell body 310. That is, in the Z-axis direction, a projection of the second connection portion 51 and a projection of the second pole 70 are completely located within a coverage of the second end heat insulation member 92.

In the Y-axis direction, the second lateral heat insulation member 91 covers the second inner lateral surface 522 of the second adapter portion 52 and avoids the second avoidance groove 54. At least part of a projection of the second anti-slip groove 55 of the second adapter portion 52 is located within a coverage of the second lateral heat insulation member 91. That is, the second lateral heat insulation member 91 may cover a part of a notch of the second anti-slip groove 55 formed on the second inner lateral surface 522, or may completely cover the notch of the second anti-slip groove 55 formed on the second inner lateral surface 522. Moreover, projections of at least part of the second anti-slip grooves 55 among the plurality of second anti-slip grooves 55 are located within the coverage of the second lateral heat insulation member 91. After the second lateral heat insulation member 91 is bonded to the second adapter portion 52 and the second tab 330 wraps the second adapter portion 52, an overlapping part between the second lateral heat insulation member 91 and the second anti-slip groove 55 may bend towards the inside of the second anti-slip groove 55. When the second lateral heat insulation member 91 is poorly bonded to the second adapter portion 52, the second anti-slip groove 55 may serve as the force application point, to facilitate tearing off the second lateral heat insulation member 91 or even an entire second heat insulation member 90 for rework.

As illustrated in FIG. 3, the end cover assembly 100 is mounted at the cell 300. The lower plastic part has a bottom surface towards a top surface of the cell body 310. The first pin 40 and the second pin 50 are located at two opposite sides of the cell body 310, respectively. The first pin 40 is inserted between the two first tabs 320 and a first side surface of the cell body 310. The two first tabs 320 are bent towards each other and connected to the first pin 40 through welding. The first lateral heat insulation member 81 and the first end heat insulation member 82 are located between the first pin 40, a part of the first lower plastic part 20, and the cell body 310, avoiding a short circuit caused by contact between the first pin 40 and the cell body 310. The second pin 50 is inserted between the two second tabs 330 and a second side surface of the cell body 310. The two second tabs 330 are bent towards each other and connected to the second pin 50 through welding. The second lateral heat insulation member 91 and the second end heat insulation member 92 are located between the second pin 50, a part of the second lower plastic part 30, and the cell body 310, avoiding a short circuit caused by contact between the second pin 50 and the cell body 310.

In an exemplary embodiment of the present disclosure, the two first tabs 320 are led out from first side surfaces of the two cell main bodies 310, respectively. In addition, the two first tabs 320 are opposite to each other and spaced apart from each other in the X-axis direction. The two first tabs 320 extend in the Y-axis direction to a side of the first adapter portion 42 away from the cell body 310. The two first tabs 320 are bent towards each other in the X-axis direction and wrap the first adapter portion 42. Each of the two first tabs 320 is welded to the first outer lateral surface 421 of the first adapter portion 42, to achieve electrical conduction between the two first tabs 320 and the first pin 40. The first adapter portion 42 is welded to the two first tabs 320, which may generate a large amount of heat. The first adapter portion 42 is spaced apart from the cell body 310 via the first lateral heat insulation member 81, to effectively block heat transfer between the first adapter portion 42 and the cell body 310 and thus ensure performance of the cell body 310.

The first adapter portion 42 has the first anti-slip groove 45 formed on the first side surface 425 of the first adapter portion 42. When the first tab 320 extends along and bends to the side of the first adapter portion 42 away from the cell body 310, the first tab 320 may cause the first lateral heat insulation member 81 to bend and adhere to an edge of the first anti-slip groove 45, separating the first tab 320 and the first anti-slip groove 45 to some extent and preventing the first anti-slip groove 45 from scratching the first tab 320. The first anti-slip groove 45 may increase a friction between the first tab 320 and the first adapter portion 42 to some extent, reducing sliding of the first tab 320 in the length direction of the first adapter portion 42. Therefore, a problem of inaccurate welding positioning between the first tab 320 and the first adapter portion 42 caused by sliding of the first tab 320 relative to the first adapter portion 42 can be avoided, improving a welding yield of the first tab 320 and the first adapter portion 42. Also, connection stability between the first tab 320 and the first pin 40 can be further enhanced after the subsequent end cover assembly 100 and the cell 300 are together mounted in the casing 200, preventing the first pin 40 from tearing the first tab 320. In this embodiment, a projection of the first anti-slip groove 45 in a length direction of the energy storage device 1000 at least partially is located within a coverage of the first tab 320.

In addition, the plurality of first anti-slip grooves 45 are formed at two opposite ends of the first side surface 425 of the first adapter portion 42 in a length direction of the first side surface 425 of the first adapter portion 42. When the two first tabs 320 are bent towards each other and wrap the first adapter portion 42, a region of each of the plurality of first anti-slip grooves 45 in contact with each of the two first tabs 320 is at two sides of a connection region between the first tab 320 and the first pin 40. Even if the first anti-slip groove 45 causes slight damage to a film material of the first tab 320, current conduction between the first tab 320 and the first pin 40 may not be affected.

In addition, in the length direction of the energy storage device 1000, the projections of the at least part of the first anti-slip grooves 45 among the plurality of first anti-slip grooves 45 fall on the first tab 320.

The first adapter portion 42 has the first avoidance groove 44 formed at an end of the first adapter portion 42 away from the first connection portion 41. In this way, the end of the first adapter portion 42 has a predetermined thickness difference, which can effectively and slowly release a deformation stress generated by a high temperature during welding of the first adapter portion 42 and the first tab 320, preventing the first adapter portion 42 from deforming and pulling the two first tabs 320 connected to the first adapter portion 42, which may cause the two first tabs 320 to break. Therefore, a risk of a current open circuit between the cell 300 and the first pin 40 can be avoided, improving a yield and safety performance of the energy storage device 1000.

The first tab 320 is welded to the first outer lateral surface 421 of the first adapter portion 42. When the first tab 320 is welded to the first pin 40, assembly tooling is located at an end of the first adapter portion 42 away from the first bending portion 43, and is aligned and extended into the first avoidance groove 44 in the length direction of the first adapter portion 42 from the end. In this way, a supporting force can be provided for the first pin 40 from the first inner surface 412 to the first outer surface 411, and a welding force can be prevented from being applied from a side of the first outer lateral surface 421 where the first outer surface 411 is located. The applied force may cause the first adapter portion 42 to be deformed and damages the cell body 310 at a side of the first adapter portion 42 at which the first inner lateral surface 422 is located. Also, the first pin 40 has the first avoidance groove 44. The assembly tooling is configured to match a size of the first avoidance groove 44. The first avoidance groove 44 is the trapezoidal groove, in such a manner that the assembly tooling can extend into the first avoidance groove 44 more easily. Moreover, the first avoidance groove 44 can enable positioning between the assembly tooling and the first adapter portion 42 to be more accurate, improving an assembly efficiency of the energy storage device 1000. In addition, the first pin 40 has the first avoidance groove 44, which can improve a utilization rate of an internal space of the energy storage device 1000 and an energy density of the energy storage device 1000 without increasing a volume of the first pin 40.

In this embodiment, the end cover assembly 100 is assembled with the cell 300 through gripping by the assembly tooling. A middle part of the end cover assembly 100 may be subjected to a pressure during the gripping of the assembly tooling and be recessed relative to two opposite ends of the end cover assembly 100 in the length direction of the end cover assembly 100. That is, the two ends of the end cover assembly 100 in the length direction of the end cover assembly 100 are raised relative to the middle part of the end cover assembly 100. The first guide surface 423 is formed at the end of the first adapter portion 42 away from the first connection portion 41. The first guide surface 423 faces towards the cell body 310, which can help the first adapter portion 42 to be directly inserted between the two first tabs 320 and the cell body 310, preventing an inner side of the first adapter portion 42 from scratching the cell body 310 and thus ensuring the performance of the cell body 310.

The first bending portion 43 corresponds to an edge position of the cell body 310. This edge is an intersection between the top surface of the cell body 310 and the first side surface of the cell body 310. The first bending portion 43 is spaced apart from the cell body 310 via the first lateral heat insulation member 81, to block heat conduction between the first bending portion 43 and the cell body 310.

The first inner surface 412 of the first connection portion 41 faces towards the top surface of the cell body 310. In addition, the first connection portion 41 is spaced apart from the cell body 310 via the first end heat insulation member 82. The first end heat insulation member 82 may block heat conduction between the first connection portion 41 and the cell body 310, protecting the performance of the cell body 310. In addition, the part of the first lower plastic part 20 is spaced apart from the cell body 310 via the first end heat insulation member 82. The first end heat insulation member 82 may also block heat conduction between the part of the first lower plastic part 20 and the cell body 310, avoiding an impact of a high temperature on the cell 300.

The two second tabs 330 are led out from second side surfaces of the two cell main bodies 310, respectively. The two second tabs 330 are opposite to each other and spaced apart from each other in the X-axis direction. The two second tabs 330 extend in the Y-axis direction to a side of the second adapter portion 52 away from the cell body 310. The two second tabs 330 are bent towards each other in the X-axis direction and wrap the second adapter portion 52. Each of the two second tabs 330 is welded to the second outer lateral surface 521 of the second adapter portion 52, to achieve electrical conduction between the two second tabs 330 and the second pin 50. The second adapter portion 52 is welded to each of the two second tabs 330, which may generate a large amount of heat. The second adapter portion 52 is spaced apart from the cell body 310 via the second lateral heat insulation member 91, to effectively block heat transfer between the second adapter portion 52 and the cell body 310, and thus ensure the performance of the cell body 310.

The second adapter portion 52 has the second anti-slip groove 55 formed on the second side surface 525 of the second adapter portion 52. When the second tab 330 extends along and bends to the side of the second adapter portion 52 away from the cell body 310, the second tab 330 may cause the second lateral heat insulation member 91 to bend and adhere to an edge of the second anti-slip groove 55, separating the second tab 330 and the second anti-slip groove 55 to some extent and preventing the second anti-slip groove 55 from scratching the second tab 330. The second anti-slip groove 55 may increase a friction between the second tab 330 and the second adapter portion 52 to some extent, reducing sliding of the second tab 330 in the length direction of the second adapter portion 52. Therefore, a problem of inaccurate welding positioning between the second tab 330 and the second adapter portion 52 caused by sliding of the second tab 330 relative to the second adapter portion 52 can be avoided, improving a welding yield of the second tab 330 and the second adapter portion 52. Also, connection stability between the second tab 330 and the second pin 50 can be further enhanced after the subsequent end cover assembly 100 and the cell 300 are together mounted in the casing 200, preventing the second pin 50 from tearing the second tab 330. In this embodiment, a projection of the second anti-slip groove 55 in the length direction of the energy storage device 1000 at least partially is located within a coverage of the second tab 330.

In addition, the plurality of second anti-slip grooves 55 are formed at two opposite ends of the second side surface 525 of the second adapter portion 52 in a length direction of the second side surface 525 of the second adapter portion 52. When the two second tabs 330 are bent towards each other and wrap the second adapter portion 52, even if the second anti-slip groove 55 causes slight damage to the film material of the second tab 330, current conduction between the second tab 330 and the second pin 50 may not be affected.

Moreover, in the length direction of the energy storage device 1000, the projections of the at least part of the second anti-slip grooves 55 among the plurality of second anti-slip grooves 55 fall on the second tab 330.

The second adapter portion 52 has the second avoidance groove 54 formed at an end of the second adapter portion 52 away from the second connection portion 51. In this way, the end of the second adapter portion 52 has a predetermined thickness difference, which can effectively and slowly release a deformation stress generated by a high temperature during welding of the second adapter portion 52 and the second tab 330, preventing the second adapter portion 52 from deforming and pulling the two second tabs 330 connected to the second adapter portion 52, which may cause the two second tabs 330 to break. Therefore, a risk of a current open circuit between the cell 300 and the second pin 50 can be avoided, improving the yield and the safety performance of the energy storage device 1000.

The second tab 330 is welded to the second outer surface 511 of the second adapter portion 52. When the second tab 330 is welded to the second pin 50, the assembly tooling is located at an end of the second adapter portion 52 away from the second bending portion 53, and is aligned and extended into the second avoidance groove 54 in the length direction of the second adapter portion 52 from the end. In this way, a supporting force can be provided for the second pin 50 from the second inner surface 512 to the second outer surface 511, and a welding force can be prevented from being applied from a side of the second outer surface 511 of the second adapter portion 52. The applied force may cause the second adapter portion 52 to deform and damage the cell body 310 at a side of the second inner surface 512. Also, the second pin 50 has the second avoidance groove 54. The assembly tooling is configured to match a size of the second avoidance groove 54. The second avoidance groove 54 is the trapezoidal groove, in such a manner that the assembly tooling can extend into the second avoidance groove 54 more easily. Moreover, the second avoidance groove 54 can enable positioning between the assembly tooling and the second adapter portion 52 to be more accurate, improving the assembly efficiency of the energy storage device 1000. In addition, the second pin 50 has the second avoidance groove 54, which can improve the utilization rate of the internal space of the energy storage device 1000 and the energy density of the energy storage device 1000 without increasing a volume of the second pin 50.

Also, in this embodiment, the end cover assembly 100 is assembled with the cell 300 through gripping by the assembly tooling. The middle part of the end cover assembly 100 may be subjected to the pressure during the gripping of the assembly tooling and be recessed relative to two opposite ends of the end cover assembly 100 in the length direction of the end cover assembly 100. That is, the two ends of the end cover assembly 100 in the length direction of the end cover assembly 100 are raised relative to the middle part of the end cover assembly 100. The second guide surface 523 is formed at the end of the second adapter portion 52 away from the second connection portion 51. The second guide surface 523 faces towards the cell body 310, which can help the second adapter portion 52 to be directly inserted between the two second tabs 330 and the cell body 310, preventing an inner side of the second adapter portion 52 from scratching the cell body 310 and thus ensuring the performance of the cell body 310.

The second bending portion 53 corresponds to the edge position of the cell body 310. This edge is an intersection between the top surface of the cell body 310 and the second side surface of the cell body 310. The second bending portion 53 is spaced apart from the cell body 310 via the second lateral heat insulation member 91, to block heat conduction between the second bending portion 53 and the cell body 310.

The second inner surface 512 of the second connection portion 51 faces towards the top surface of the cell body 310. In addition, the second connection portion 51 is spaced apart from the cell body 310 via the second end heat insulation member 92. The second end heat insulation member 92 may block heat conduction between the second connection portion 51 and the cell body 310, protecting the performance of the cell body 310. In addition, the part of the second lower plastic part 30 is spaced apart from the cell body 310 via the second end heat insulation member 92. The second end heat insulation member 92 may also block heat conduction between the part of the second lower plastic part 30 and the cell body 310, avoiding the impact of the high temperature on the cell 300.

As illustrated in FIG. 2 and FIG. 3, the end cover assembly 100 and the cell 300 are mounted together in the casing 200. An edge of the end cover 10 is connected to an edge of the opening 201 of the casing 200 by means of welding, bonding, or the like, to seal the energy storage device 1000.

In the related art, after being led out from the cell, a cell tab of the energy storage device 1000 is welded in cooperation with a pin of the end cover assembly 100. However, a friction between an existing pin and the cell tab is small, and thus the cell tab tends to slide relative to the pin, which may reduce a welding yield of the cell tab and the pin, lowering a product yield of the energy storage device 1000.

In the embodiments of the present disclosure, the anti-slip groove is formed on a side surface of the pin in a width direction of the pin. When the tab extends to a side of an adapter portion of the pin away from the cell body 310, the anti-slip groove can increase a friction between the tab and the adapter portion to some extent, and reduce sliding of the tab in the length direction of the adapter portion. Therefore, a problem of inaccurate welding positioning between the tab and the adapter portion caused by the tab sliding relative to the adapter portion can be avoided, improving a welding yield of the tab and the adapter portion. Also, connection stability between the tab and the pin can further be improved after the subsequent end cover assembly 100 and the cell 300 are jointly mounted in the casing 200, preventing the pin from tearing the second tab 330, and thus ensuring the product yield of the energy storage device 1000.

The above are only some embodiments and implementations of the present disclosure, and the scope of protection of the present disclosure is not limited thereto. Changes or replacements can be easily conceived of by any person skilled in the art within the technical scope disclosed by the present disclosure, which shall all fall within the scope of protection of the present disclosure. Therefore, the scope of protection of the present disclosure shall be subject to the scope of protection of the claims.

## Claims

1. A pin, comprising a connection portion, an adapter portion, and a bent portion, wherein:
the connection portion and the adapter portion are connected to two ends of the bent portion, respectively, to enable the connection portion and the adapter portion to be angled with each other; and
the adapter portion has an inner lateral surface, an outer lateral surface, and a side surface, wherein the inner lateral surface and the outer lateral surface is opposite to each other in a thickness direction of the adapter portion, wherein the side surface is a surface of the adapter portion in a width direction of the adapter portion, and wherein the side surface is connected to the inner lateral surface and the outer lateral surface,
wherein the side surface has an anti-slip groove recessed towards the inside of the adapter portion from the side surface, the anti-slip groove extending through the outer lateral surface and the inner lateral surface.

2. The pin according to claim 1, wherein the adapter portion further has a guide surface connected to a side of the inner lateral surface away from the bent portion in a length direction of the inner lateral surface, wherein:
the guide surface is connected to the inner lateral surface;
the guide surface is an inclined surface, the guide surface being inclined towards the outer lateral surface in a direction away from the bent portion along a length direction of the adapter portion; and
the adapter portion comprises an avoidance groove recessed from the guide surface and the inner lateral surface, wherein the avoidance groove has a groove bottom wall and a groove side wall connected to an edge of the groove bottom wall, the groove bottom wall being connected to the guide surface at an edge of the groove bottom wall away from the inner lateral surface, the groove bottom wall being angled with each of the guide surface and the groove side wall, and the groove side wall being connected to the guide surface and the inner lateral surface.

3. The pin according to claim 2, wherein the groove bottom wall is of a trapezoid shape, wherein in the length direction of the adapter portion, a long side of the trapezoid is located closer to an end of the adapter portion away from the bent portion than a short side of the trapezoid.

4. The pin according to any one of claims 1 to 3, wherein two side surfaces are provided, and a plurality of anti-slip grooves are provided, wherein:
the plurality of anti-slip grooves are all recessed from the two side surfaces; and
anti-slip grooves of the plurality of anti-slip grooves formed on each of the two side surfaces are arranged at intervals in a length direction of the adapter portion.

5. The pin according to claim 4, wherein:
anti-slip grooves of the plurality of anti-slip grooves formed on one of the two side surfaces are located at two ends of the adapter portion in the length direction of the adapter portion; and
the plurality of anti-slip grooves located on the two side surfaces are symmetrically arranged with respect to a middle axis of the adapter portion extending in the length direction of the adapter portion.

6. The pin according to claim 4, wherein in the width direction of the adapter portion, a depth of each of the plurality of anti-slip grooves is greater than or equal to 0.05 mm and smaller than or equal to 3 mm.

7. An end cover assembly, comprising the pin according to any one of claims 1 to 6, wherein the end cover assembly further comprises:
a lower plastic part; and
a heat insulation member comprising a lateral heat insulation member and an end heat insulation member, wherein:
in a thickness direction of the end cover assembly, the connection portion is mounted at a side of the lower plastic part in a thickness direction of the lower plastic part, the bent portion is bent away from the lower plastic part, and the adapter portion extends away from the lower plastic part; and
the end heat insulation member is stacked on and connected to an inner surface of the connection portion, the lateral heat insulation member is stacked on and connected to the inner lateral surface of the adapter portion, and in a length direction of the end cover assembly, a projection of each of the plurality of anti-slip grooves at least partially is located within a coverage of the lateral heat insulation member.

8. The end cover assembly according to claim 7, wherein the lower plastic part comprises a body, wherein the body is provided with a protrusion protruding from a side of the body in a thickness direction of the body, the protrusion having an assembly groove recessed from a surface of the protrusion away from the body, wherein:
the connection portion is mounted in the assembly groove; and
in the thickness direction of the end cover assembly, the end heat insulation member completely covers the assembly groove.

9. The end cover assembly according to claim 7 or 8, wherein:
the lateral heat insulation member extends along and is connected to a surface of the bent portion and a part of the inner surface of the connection portion; and
the lateral heat insulation member partially overlaps with the end heat insulation member, an overlapping part between the lateral heat insulation member and the end heat insulation member being located within a coverage of the connection portion.

10. An energy storage device, comprising:
a casing having an opening;
a cell mounted in the casing, wherein the cell comprises a cell body and a tab extending out of the cell body from a side surface of the cell body in a length direction of the cell body; and
the end cover assembly according to any one of claims 7 to 9, the end cover assembly being mounted at an end of the cell body facing towards the opening, wherein:
the adapter portion is located at a side of the cell body in the length direction of the cell body and is separated from the cell body by the lateral heat insulation member;
the connection portion is located at a side of the cell body in a height direction of the cell body and is separated from the cell body by the end heat insulation member;
the tab extends to a side of the adapter portion away from the cell body and is bent, the tab being welded to the adapter portion and electrically connected to the adapter portion; and
in a length direction of the energy storage device, the projection of each of the plurality of anti-slip grooves is located within a coverage of the tab.

11. A power consumption apparatus, comprising:
the energy storage device according to claim 10, wherein the energy storage device is configured to supply power to the power consumption apparatus.
